# EUROPEAN PATENT APPLICATION

(11) **EP 1 876 011 A2**
(43) Date of publication of application: **09.01.2008**
(21) Application number: 07012967.1
(22) Date of filing: 03.07.2007
(51) Int. Cl.: B29C 51/26, B29C 51/10

(54) **Telescopically adjustable covering device, for the vacuum box of thermoforming machines**

(30) Priority: 07.07.2006 IT MI20061327
(71) Applicant: FORMA S.R.L., 27029 VIGEVANO (PV) (IT)
(72) Inventor: Gatti, Giorgio, 28100 Novara (IT)
(74) Representative: Coloberti, Luigi

(57) **Abstract**

An adjustable cover device, for air-tight sealing the vacuum box (10) of the mould and for supporting plastic sheets in thermoforming machines; the device comprises four central plates (14A, 14B, 14C, 14D) and four L-shaped corner plates (13A, 13B, 13C, 13D) telescopically sliding in relation to one another in the direction of the longitudinal and/or cross axes of a rectangular window (12), to adapt the sizes of the window (12) to moulds and plastic sheets of different dimensions; the central plates (14A, 14B, 14C, 14D) and the corner plates (13A, 13B, 13C, 13D) are provided with guide surfaces for automatically moving the corner plates (13A, 13B, 13C, 13D) by the movement of the central plates (14A, 14B, 14C, 14D) of the cover device.

## Description

### BACKGROUND OF THE INVENTION

This invention refers to the field of vacuum forming machines for thermoforming sheets or plates of plastic material, and in particular relates to an adjustable cover device for air-tight sealing a vacuum box having an adjustable rectangular window, to adapt the cover device to moulds and or plastic sheets of different sizes.

### STATE OF THE ART

In a conventional thermoforming machine the mould usually is enclosed in a vacuum box provided with a rectangular window upon which a sheet or plate of plastic material is rested during heating and a subsequent thermoforming step.

During the heating, it is consequently necessary to control the floatation and flatness of the plastic sheet, by controlling the pressure inside the box enclosing the mould.

For this reason the box is air-tight sealed by an upper frame providing a rectangular window or aperture having substantially the same sizes of the mould in order to limit, as far as possible, the sizes of the plastic sheets to be moulded and consequently reduce the consumption of plastic material.

In order to use sheets of limited dimensions, in the past use was made of special adapter frames for reducing the size of the upper window of the box, as for example described in EP-A-0767047; however this solution calls for the prearrangement of different adapter frames having windows of different dimensions, making it necessary to replace the frame from time to time, in relation to the dimensions of the mould and of the plastic sheets to be thermoformed, with a consequent interruption of the working cycle of the thermoforming machine.

In order to obviate these drawbacks, EP-A-0692365 and EP-A 0882566 propose the use of cover devices for a vacuum box, consisting of movable plates whereby it is possible to change the dimensions of the window in relation to the size of the mould, while at the same time maintaining air-tight sealed conditions.

In particular, EP-A-0692365 proposes the use of a cover device comprising four coplanar cover plates supported by the vacuum box of the mould; the adjacent edges of the cover plates are provided with dovetail guides to enable them to slide in relation to one another. The individual cover plates are also provided with a sealing strip on the upper face along the internal edge of the window, against which each sheet of plastic material is tightly pressed by an upper locking frame.

Although this solution is structurally simple and advantageous, in that the upper and lower faces of the four cover plates are coplanar with one another, thereby simplifying the sealing against the plastic sheet and a support base for the mould, it nevertheless presents a drawback due to the protrusion of the individual cover plates the four sides of the box, which varies according to the dimensions of the window supporting the plastic sheets. In addition to the increased overall dimensions of the machine, it is also necessary to take into consideration that the protrusion of the plates on the side of the operator, is a hindrance and a danger for the operator himself both during the positioning of the plastic sheets to be thermoformed, and the removal of a moulded piece.

EP-A-0882566 in turn proposes a different solution in which once again use is made of a cover device comprising four movable plates arranged on different planes, and in which the upper cover plates are provided with upwardly turned wings along the longitudinal sides of a rectangular window, whilst bars secured to the edges of the lower plates are provided to delimit the cross sides of the window on the box; the upper edges of the longitudinal wings and the cross bars lie on a same plane, and are again provided with sealing strips against which a plastic sheet to be thermoformed is sealingly pressed. A solution of this kind presents the same drawbacks as the previous one; moreover the disposition of the cover plates on different planes at the lower side of the window, considerably complicates the seal for the base support the mould, which is necessary for controlling the pressure inside the box during heating and/or thermoforming of a plastic sheet.

### OBJECTS OF THE INVENTION

The main object of the invention is to provide a cover device for a vacuum box of a mould in a thermoforming machine, provided with an adjustable window adaptable to moulds and to plastic sheets of different sizes, whereby it is possible to obviate the drawbacks of the hitherto known cover devices.

In particular, one object of the invention is to provide a cover device of the aforementioned type which, in addition to being structurally simple, is provided with a coplanar disposition both of the upper edges of the window supporting the plastic sheets, and of the lower edges, thereby considerably simplifying the sealing towards the same plastic sheet and the mould support base.

A still further object of the invention is to provide a covering device for the vacuum box of a mould of a thermoforming machine, having reduced dimensions and wholly devoid of protruding portions of the cover plates, and in which the working position of an operator remains substantially unchanged and independent of the dimensions of the window of the box; this provides less laborious working conditions for the operator and less injuring risks.

### BRIEF DESCRIPTION OF THE INVENTION

The foregoing can be achieved by means of a covering device for a vacuum box of a mould in a thermoforming machine, according to claim 1.

More properly the principle upon which the invention is based, consists in using a telescopically extensible plate system on all four sides of the window of the box, in which used is made of four L-shaped corner plates, freely slidable and guided by four central plates, to delimit the longitudinal and cross edges of an adjustable rectangular window, in which the central plates, during their approaching and spreading apart movements, automatically draw the corner plates causing them to telescopically slide, and simultaneously adjusting the dimensions of the window of the box.

### BRIEF DESCRIPTION OF THE DRAWINGS

The general features of the covering device according to the invention, and one of its preferential embodiments, will be more clearly evident from the following description with reference to the accompanying drawings, in which:
Fig. 1 is a top view of the plate system of the cover device;
Fig. 2 is a longitudinal cross-sectional view along the line 2-2 of figure 1;
Fig. 3 is an enlarged cross-sectional view of the left-hand part of figure 2;
Fig. 4 is an enlarged detail of the right-hand side of figure 3;
Fig. 5 is an enlarged detail of the left-hand side of figure 3;
Fig. 6 is an enlarged detail of the upper left-hand corner of figure 1;
Fig. 7 is a top view similar to figure 1, showing the control system for moving the central plates.

### DETAILED DESCRIPTION OF THE INVENTION

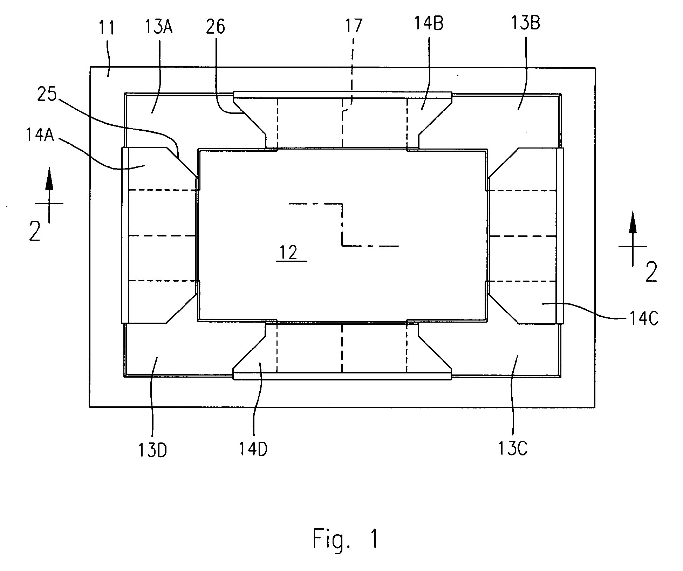

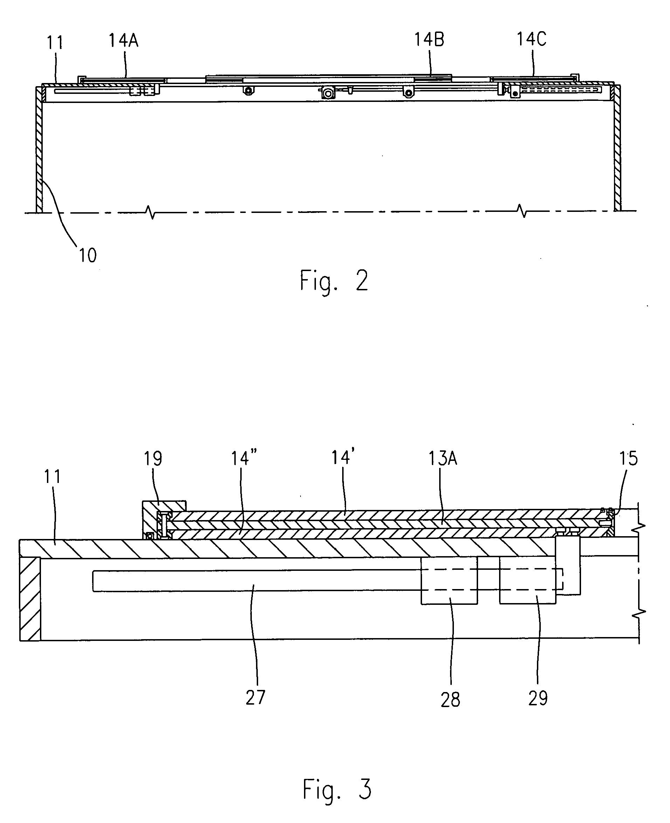

As known from figures 1 and 2 of EP-A-0882566 a work station of a thermoforming machine usually comprises a vacuum box for a shaping mould secured to a vertically movable support base, for raising the mould against a sheet a plate of plastic material to be thermoforming after it has been heated and brought up to a suitable softening temperature, while is tightly pressed against the peripheral edges of a rectangular window provided by a system of cover plates.

Therefore, according to this invention, the reference number 10 has been used to generically indicate the upper part of a vacuum box for a mould, not shown, comprising a horizontal frame 11 for supporting a system of telescopically extensible plates, whose internal edges define the aperture of a rectangular window 12 for supporting a sheet of plastic material to be thermoformed; the dimensions in length and/or in width of the window 12 can be adjusted between a maximum aperture position and a minimum aperture position of the window, in relation to the dimensions of a mould and the sheets of plastic material to be thermoformed.

The plates system of the cover device for air-tight sealing the box 10, comprises four L-shaped corner plates, indicated by the reference numbers 13A, 13B, 13C and 13D, and four central plates 14A, 14B, 14C, 14D which, in combination with the corner plates, delimit the longitudinal and cross edges of the window 12.

The four corner plates 13A, 13B, 13C and 13D are identical to one another, as the four central plates 14A, 14B, 14C and 14D; consequently, the following description of the corner plate 13A and the central plate 14A, applies identically to the remaining plates of the cover device.

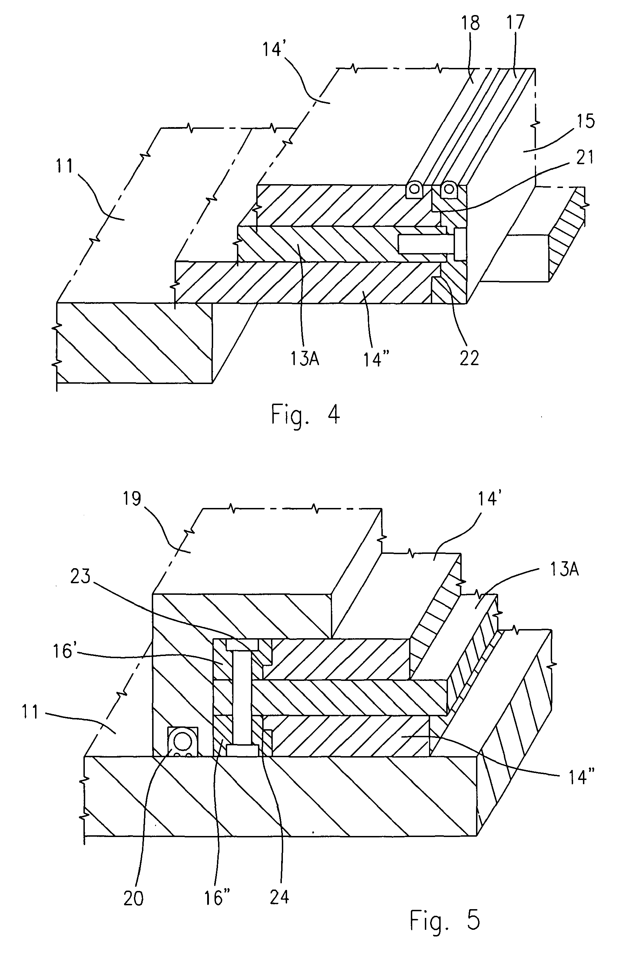

As shown for the corner plate 13A in figures 4, 5 and 6, each corner plate is in the form of an L-shaped member having a first side arm 13' which extends in the direction of the longitudinal axis of the window 12, and a second side arm 13", orthogonal to the first one, which extends in the direction of the cross axis.

The internal edges of the corner plate 13A are provided with a guide ledge 15, as is more clearly shown in the enlarged detail of figure 4, while the outer edges of the same corner plate 13A are provided with two guide ledges, and precisely an upper ledge 16' and a lower ledge 16" as indicated in the detail of figure 5.

The central plate 14A, likewise to the other ones, in turn comprises an upper plate member 14' and a lower plate member 14" spaced apart from each other and mechanically joined for example by a spacer and an intermediate welding 17.

The space between the two plate members 14' and 14" is substantially equivalent to the thickness of the corner plate 13A, to enable it to freely slide, whilst the total thickness of the three plate members 14', 13" and 14" is equivalent to the width or dimensions in height of the ledge 15, so that the upper surfaces of the plate member 14' and of the ledge 15, like the lower surfaces, are coplanary arranged, thereby forming a flat and airtight supporting surface for the sheets of plastic material to be thermoformed, and respectively for the support base of the mould.

In order to ensure the necessary airtight seal of the plastic sheet around the entire perimeter of the window 12, the internal ledges 15 of the corner plates and upper plates members 14' of the central plates are provided with longitudinal slots in which the sealing strips 17 and 18 are seated; sealing strips 17 and 18 can be of any type and of any material suitable for such use.

An airtight seal with respect to the frame 11, on the outer side of each central plate 14A, 14B, 14C, 14D, is achieved by an angle bar 19 secured to the upper plate member 14' and to the lower ledge 16"; the vertical wing of the angle bar 19 and the lower ledge 16", on the side facing the frame 11, are provided with a longitudinal slot in which an airtight seal 20, 20' for example an inflatable or other type is seated.

As mentioned previously, the ledges 15, 16' and 16", secured to the internal and external edges of the corner plates provide a guide for a telescopic sliding of the same corner plates with respect to the central plates 14A, 14B, 14C and 14D. In this connection, as shown in the enlarged details of figures 4 and 5, the opposite edges of the ledges 15, 16', 16" and of the two superimposed plate members 14', 14'' of each central plate, are provided with respective longitudinal guide steps 21, 22, 23 and 24, which allow the sliding of the corner plates, in one and/or in both directions of the two main axes of the window 12, following the reciprocal approaching and/or spreading apart movement of the central plates belonging to two opposite sides of the window 12.

According to a further feature of the cover device in conformity with this invention, the central plates 14A, 14B,14C and 14D, at both ends are provided with slanted edges 25, 26, having a same slanting angle, for example of 45°, so as to be disposed close together in the condition of minimum aperture of the window 12.

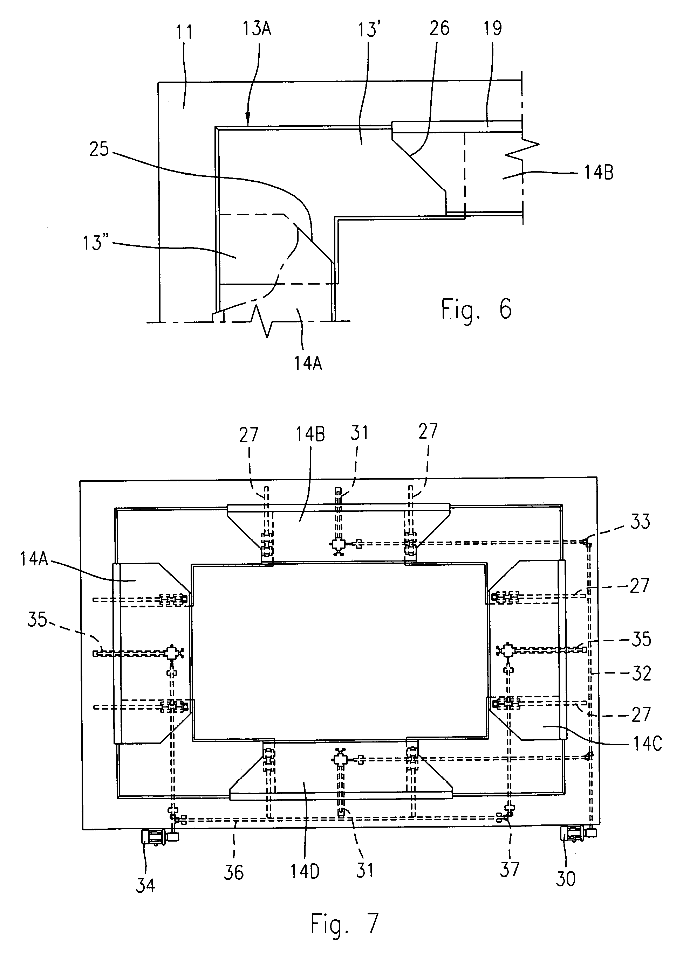

Figure 7 of the drawings is a top view corresponding to that of figure 1, which shows the control means for simultaneously and mutually approaching and/or spreading apart the central plates on opposite sides of the window 12.

In this connection, as shown in the detail of figure 3, each central plate 14A, 14B, 14C, and 14D in its movement at right angles to its longitudinal axis, is guided by a pair of cross rods 27 secured and parallely extending to the lower plate member 14"; the bars 27 are guided in their movement, by two bushes 28, 29, figure 3, secured in place beneath the frame 11 of the vacuum box for the mould.

The approaching and spreading apart movements of the central plates are obtained by means of a motorization and mechanical power transmission, for example of the type shown in figure 7; in particular, the two central plates 14B and 14D on two sides parallel to the longitudinal axis of the window 12, are operatively connected to a ratio motor 30 by a screw-nut assembly 31, drive shafts 32 and gears 33.

In turn, the other central plates 14A and 14C are operatively connected to a respective ratio motor 34 by means of a screw-nut assembly 35, drive shafts 36 and gears 37.

By simultaneously, or separately, operating the two control ratio motors 30, 34, it is possible to mutually approach and/or spread apart the central plates, while automatically causing the sliding movement of the corner plates in the direction of one and/or both main axes of the window 12, thereby enabling the dimensions of the window to be substantially and continuously changed or adjusted, by a simple telescopic movement between the plates of the cover device.

From what has been described and shown in the example of the accompanying drawings, it will be clear that a cover device has been provided for covering the vacuum box for a mould in thermoforming machines, capable of achieving the necessary airtight seal and support of plastic sheets of different sizes to be processed.

It is understood that what has been described and shown with reference to the various figures, has been given purely by way of example in order to illustrate the general features of the cover device according to the invention, and of one of its preferential embodiments.

Consequently, other modifications and/or variations may be made to the entire cover device or parts thereof, without thereby departing from the claims.

## Claims

1. A cover device for a vacuum box (10) of a thermoforming mould, comprising a plurality of cover plates (13, 14) movable in relation to one another, to form an adjustable rectangular window (12) having variable dimensions according to a first main axis which extends in a longitudinal direction, and respectively according to a second main axis which extends in a cross direction, **characterised by** comprising four L-shaped corner plates (13A, 13B, 13C, 13D), and four central plates (14A, 14B, 14C, 14D) in which the side arms (13'; 13'') of the corner plates (13A, 13B, 13C, 13D) belonging to a same side of the rectangular window (12) partially extend, each corner plate (13A, 13B, 13C, 13D) being freely slidable and selectively drawn by the central plates (14A, 14B, 14C, 14D) of adjacent sides of the rectangular window (12) of the cover device.

2. The cover device according to claim 1, **characterised in that** the corner (13A, 13B, 13C, 13D) plates and the central plates (14A, 14B, 14C, 14D) are provided with reciprocal guide means (15, 16) parallely extending to said main axes of the window (12).

3. The cover device according to claim 2, **characterised in that** the guiding means comprise guide ledges (15, 16' 16") secured to the inner and outer edges of each corner plate (13A, 13B, 13C, 13D), and **in that** said ledges (15, 16', 16") and said central plates (14A, 14B, 14C, 14D) have longitudinal shaped edges providing superimposed guide surfaces (21, 22, 23, 24).

4. The cover device according to claim 3, **characterised in that** the guide ledges (15) secured to the internal edges of the corner plates (13A, 13B, 13C, 13D), and the internal edge of the central plates (14A, 14B, 14C, 14D), are provided with longitudinal slots for seating sealing strips (17, 18).

5. The cover device according to claim 4, **characterised in that** the sealing strips (17, 18) are of inflatable type.

6. The cover device according to claim 1, **characterised in that** the corner plates (13A, 13B, 13C, 13D) and the central plates (14A, 14B, 14C, 14D) are provided with upper and bottom coplanar surfaces to sealingly contact a plastic sheet, and respectively a mould supporting base.

7. The cover device according to claim 1, **characterised in that** each central plate (14A, 14B, 14C, 14D) comprises an upper and a lower plate member (14', 14"), vertically spaced apart, and **in that** the total thickness of the upper and lower plate members (14', 14'') of each central plate (14A, 14B, 14C, 14D), and of the corner plates (13A, 13B, 13C, 13D), is equivalent to the height dimensions of the internal guide ledge (15).

8. The cover device according to claim 1, **characterised in that** the central plates (14A, 14B, 14C, 14D) have slanted end edges.

9. The cover device according to claim 1, **characterised by** comprising guide means (27, 28, 29) and control means (30, 32, 33; 34, 35, 36) for guiding and controlling the sliding movements of the central plates (14A, 14B, 14C, 14D) in the directions of said main axes of the window (12).

10. The cover device according to claim 9, **characterised by** comprising control means (30, 32, 33) for controlling the movement of the central plates (14A, 14B) parallel to a first axis, independent from the control means (34, 35, 36) for controlling the movement of the central plates (14C, 14D) parallel to a second axis of the window (12).
